# FASCICULE DE BREVET EUROPEEN

(11) **EP 3 917 814 B1**
(45) Date de publication et mention de la délivrance du brevet: **07.01.2026**
(21) Numéro de dépôt: 20708539.0
(22) Date de dépôt: 15.01.2020
(51) Int. Cl.: B60W 30/12, B60W 50/06, B60W 50/00

(54) **PROCÉDÉ DE GESTION D'UNE FONCTIONNALITÉ D'AIDE AU MAINTIEN DANS LA VOIE FOURNIE PAR UN SYSTÈME D'AIDE À LA CONDUITE D'UN VÉHICULE TERRESTRE À MOTEUR**
VERFAHREN ZUR VERWALTUNG EINER FUNKTION ZUR UNTERSTÜTZUNG DER SPURHALTUNG, DIE VON EINEM FAHRASSISTENZSYSTEM EINES MOTORISERTEN LANDFAHRZEUGS BEREITGESTELLT WIRD
METHOD FOR MANAGING A LANE-KEEPING ASSISTANCE FEATURE PROVIDED BY A DRIVING ASSISTANCE SYSTEM FOR A MOTORISED LAND VEHICLE

(30) Priorité: 31.01.2019 FR 1900919
(43) Date de publication de la demande: 08.12.2021
(73) Titulaire: Stellantis Auto SAS, 78300 Poissy (FR)
(72) Inventeur: VARNIER, Matthieu, 78320 LA VERRIERE (FR); GIRAUD, David, 92290 CHATENAY MALABRY (FR)
(74) Mandataire: ESIP
(86) Numéro de dépôt international: PCT/FR2020/050054
(87) Numéro de publication internationale: WO 2020/157408

(56) Documents cités:
- EP-A1- 2 251 238
- DE-A1- 102006 004 772
- JP-A- 2014 133 477

## Description

### Domaine technique de l'invention

La présente invention concerne le domaine des systèmes d'aide à la conduite pour véhicules terrestres à moteur. L'invention porte notamment sur un procédé de détermination d'une valeur ponctuelle d'un paramètre de fonctionnement utilisé pour gérer une fonctionnalité d'aide au maintien dans la voie fournie par un système d'aide à la conduite d'un véhicule terrestre à moteur ainsi que sur un système informatique mettant en œuvre un tel procédé. L'invention s'applique notamment aux véhicules automobiles.

### Etat de la technique

On sait que les systèmes d'aide à la conduite des véhicules actuels, notamment ceux destinés à l'assistance pour la conduite autonome, basent généralement les fonctionnalités d'aide à la conduite (e.g. freinage d'urgence, évitement latéral, maintien dans la voie, etc.) sur une perception d'un environnement de conduite déterminée en utilisant les appareils de détection de natures diverses qui sont aujourd'hui agencés dans la plupart des véhicules (LIDAR, RADAR, caméra, capteurs à ultrasons, etc.).

Parmi ces fonctionnalités fournies par certains systèmes d'aide à la conduite de véhicules actuels, on sait que les fonctionnalités d'aide au maintien dans la voie permettent, notamment dans le contexte de la conduite autonome, d'assurer le positionnement et le maintien du véhicule dans une voie de circulation. Généralement, ces fonctionnalités d'aide au maintien dans la voie sont fournies en exploitant des données et/ou des signaux généré(e)s en utilisant au moins une caméra agencée dans le véhicule ainsi que divers appareillages qui permettent d'exploiter ces données et/ou signaux pour déterminer le positionnement du véhicule vis-à-vis d'une ou plusieurs voies de circulation et, si besoin, influer sur certains organes du véhicule, notamment des organes de direction, pour assurer le guidage/maintien approprié du véhicule vis-à-vis d'une voie de circulation. En outre, en particulier lorsque ces fonctionnalités sont destinées à permettre la mise en œuvre de procédures de conduite autonome, les systèmes d'aide à conduite des véhicules actuels sont dans la plupart des cas pourvus de dispositifs/appareillages pour permettre l'activation et la désactivation de ces fonctionnalités d'aide au maintien dans la voie de manière automatique.

On connait par le document DE102006004772 un système d'assistance au conducteur à utiliser pendant la conduite du véhicule, doté d'un dispositif de commande évaluant les signaux des capteurs, le système ayant des fonctions d'avertissement de sortie de voie et d'assistance au maintien de voie activées et désactivées sur la base d'une mesure confidentielle. On, connait par le document EP2251238 un dispositif d'assistance au déplacement d'un véhicule. On connait par le document JP2014133477 un dispositif d'aide au déplacement déterminant une trajectoire à partir d'image capturées.

Cependant, on constate que ces moyens qui permettent l'activation et la désactivation automatique de ces fonctionnalités d'aide au maintien dans la voie sont parfois à l'origine de certains désagréments. On a par exemple constaté que certaines situations peuvent provoquer l'apparition de basculements répétés entre un état actif, i.e. un état dans lequel la fonctionnalité d'aide au maintien dans la voie est activé, et un état inactif, i.e. un état dans lequel la fonctionnalité d'aide au maintien dans la voie est désactivé. Or, il est évident que ces basculements répétés sont préjudiciables dans la mesure où ils obligent le conducteur à rester en permanence vigilant au cas où celui-ci devrait reprendre le contrôle du véhicule lors de la désactivation de la fonctionnalité d'aide au maintien dans la voie, ce qui, évidemment, va à l'encontre du but premier de ces fonctionnalités qui est de permettre la conduite autonome.

Par ailleurs, indépendamment de la gestion automatisée de l'activation des fonctionnalités d'aide au maintien dans la voie, on constate aussi que les systèmes d'aide à la conduite actuels qui fournissent de telles fonctionnalités produisent dans certaines situations des guidages erronés, ce qui est aussi particulièrement dommageable dans le contexte de la conduite autonome.

### Présentation de l'invention

L'invention vise à fournir un procédé pour pallier ces inconvénients. L'invention vise en particulier à fournir un procédé et un système qui contribuent à limiter les basculements intempestifs entre un état actif et un état inactif d'une fonctionnalité d'aide au maintien dans la voie. Plus subsidiairement, l'invention a pour but de fournir un procédé et un système qui peuvent limiter le risque de voir se produire des guidages erronés.

A cet effet, l'invention a pour objet un procédé de détermination d'une valeur ponctuelle d'un paramètre de fonctionnement utilisé pour gérer l'activation et la désactivation d'une fonctionnalité d'aide au maintien dans la voie fournie par un système d'aide à la conduite d'un véhicule terrestre à moteur, le procédé comprenant les étapes de :
- déterminer une valeur ponctuelle d'un indicateur de confiance quantifiant un niveau de confiance quant à la perception d'une voie de circulation située à proximité du véhicule en exploitant des données générées en utilisant au moins un appareil de détection du système d'aide à la conduite du véhicule,
- déterminer une valeur antérieure du paramètre de fonctionnement,
- comparer la valeur ponctuelle de l'indicateur de confiance avec une première valeur seuil et une deuxième valeur seuil inférieure à la première valeur seuil, et,
- lorsque la valeur ponctuelle de l'indicateur de confiance est supérieure ou égale à la première valeur seuil, déterminer la valeur ponctuelle du paramètre de fonctionnement en opérant une augmentation de la valeur antérieure pour autant que celle-ci soit inférieure à une valeur maximale prédéfinie,
- lorsque la valeur ponctuelle de l'indicateur de confiance est inférieure à la première valeur seuil et supérieure ou égale à la deuxième valeur seuil, déterminer la valeur ponctuelle du paramètre de fonctionnement en opérant une diminution de la valeur antérieure,
- lorsque la valeur ponctuelle de l'indicateur de confiance est inférieure à la deuxième valeur seuil, affecter une valeur nulle à la valeur ponctuelle du paramètre de fonctionnement.

On entend par « aide au maintien dans la voie », tout type d'assistance ou de conduite autonome, par exemple, en lien avec la voie. Par exemple, il peut s'agir d'un procédé de conduite pour que le véhicule reste dans sa voie, pour qu'il envisage un changement de voie, pour qu'il envisage une sortie de la voie afin de changer de direction, etc.

Selon une variante, le procédé peut comprendre une étape consistant à désactiver la fonctionnalité d'aide au maintien dans la voie lorsque la valeur ponctuelle du paramètre de fonctionnement est inférieure à une première valeur de consigne.

Selon une autre variante, le procédé peut comprendre une étape consistant à autoriser l'activation de la fonctionnalité d'aide au maintien dans la voie lorsque la valeur ponctuelle de l'indicateur de confiance est supérieure ou égale à la première valeur seuil la valeur ponctuelle du paramètre de fonctionnement est supérieure ou égale à une deuxième valeur de consigne supérieure à la première valeur de consigne.

Selon une autre variante, l'étape d'opérer une diminution peut consister à retrancher de la valeur antérieure une proportion de celle-ci et/ou une première valeur préétablie sélectionnée en fonction de la valeur antérieure.

Selon une autre variante, l'étape d'opérer une augmentation peut consister à ajouter à la valeur antérieure une proportion de celle-ci et/ou une deuxième valeur préétablie sélectionnée en fonction de la valeur antérieure.

L'invention a en outre pour objet un système informatique de détermination d'une valeur ponctuelle d'un paramètre de fonctionnement utilisé pour gérer l'activation et la désactivation d'une fonctionnalité d'aide au maintien dans la voie fournie par un système d'aide à la conduite d'un véhicule terrestre à moteur, le système comprenant des moyens mettant en œuvre un procédé tel que défini ci-dessus.

Selon une variante, le système peut comprendre au moins un processeur et des moyens de stockage dans lesquels sont stockés au moins un programme pour l'exécution d'étapes selon le procédé de détermination mis en œuvre par le système.

L'invention a en outre pour objet un véhicule terrestre à moteur comprenant un système tel que défini ci-dessus.

### Brève description des figures

D'autres caractéristiques et avantages de l'invention apparaîtront à l'examen de la description détaillée ci-après, et des dessins annexés, sur lesquels :
[Fig. 1] est un schéma bloc d'un système de détermination selon l'invention, et
[Fig. 2] est un organigramme illustrant certaines étapes d'un procédé de détermination selon l'invention.

### Description détaillée de l'invention

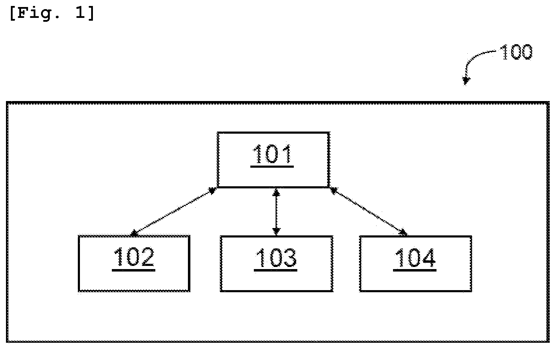

Comme illustré à la figure 1, le système de détermination 100 d'une valeur ponctuelle d'un paramètre de fonctionnement utilisé pour gérer une fonctionnalité d'aide au maintien dans la voie fournie par un système d'aide à la conduite d'un véhicule terrestre à moteur selon la présente invention comprend une unité de traitement d'information 101, comprenant un ou plusieurs processeurs, un support de stockage de données 102, au moins une interface d'entrée et sortie 103, permettant la réception de données/signaux et l'émission de données/signaux et, éventuellement, un processeur de signal numérique 104 apte à recevoir des données, les démoduler, les amplifier, et ce conformément aux connaissances générales de l'homme du métier.

Selon certains modes de réalisation, le système 100 est embarqué dans un véhicule terrestre à moteur, par exemple un véhicule automobile, et est distribué parmi un ou plusieurs calculateurs. Selon le mode de réalisation préféré, le système 100 fait partie intégrante d'un calculateur du système d'aide à la conduite (non représenté) du véhicule qui s'appuie sur une pluralité d'appareils de détection (non représentés) agencés dans le véhicule. De préférence, le système d'aide à la conduite comprend au moins un appareil de télédétection par laser, un appareil de radiodétection, une caméra et/ou un capteur à ultrasons, chacun comprenant de préférence un module de traitement des signaux apte à générer des données sur la base de signaux reçus. Alternativement, ou cumulativement, le système d'aide à la conduite comprend un module de traitement de signaux unique apte à générer des données sur la base de signaux transmis par chacun des appareils de détection. De manière conventionnelle, le système d'aide à la conduite comprend aussi un ou plusieurs ordinateurs/calculateurs qui, selon des rôles établis et en fonction de signaux/données généré(e)s par les appareils de détection, contrôlent le fonctionnement de certains organes du véhicule pour contribuer à la fourniture de diverses fonctionnalités d'aide à la conduite (e.g. assistance au freinage d'urgence, évitement d'obstacle, maintien dans la voie, etc.). En particulier, afin de fournir une fonctionnalité d'aide au maintien dans la voie, le système d'aide à la conduite du véhicule est apte à influer sur certains organes du véhicule, notamment des organes de direction et/ou de contrôle de la dynamique de déplacement du véhicule, pour assurer le guidage/maintien approprié du véhicule vis-à-vis d'une voie de circulation. Alternativement, selon un autre mode de réalisation particulier, le système 100 est hébergé par un calculateur indépendant et interagit avec un calculateur du système d'aide à la conduite du véhicule pour obtenir les données générées en utilisant les appareils de détection. Alternativement, les données sont générées par le système d'aide à la conduite et stockées par celui-ci dans le support de stockage de données 102 du système 100.

Pour certaines tâches relatives à certaines étapes du procédé selon l'invention décrit ci-après, le système 100 interagit, de préférence par le biais de son interface d'entrée et sortie 103, avec le système d'aide à la conduite pour obtenir et exploiter des données générées en utilisant la caméra du système d'aide à la conduite du véhicule. Par ailleurs, relativement à d'autres étapes du procédé selon l'invention décrit ci-après, le système 100 interagit avec le système d'aide à la conduite également pour contrôler l'activation et la désactivation de la fonctionnalité d'aide au maintien dans la voie fournie par le système d'aide à la conduite.

Tous les éléments décrits ci-dessus contribuent pour permettre au système 100 de mettre en œuvre un procédé de détermination d'une valeur ponctuelle d'un paramètre de fonctionnement utilisé pour gérer une fonctionnalité d'aide au maintien dans la voie fournie par un système d'aide à la conduite d'un véhicule terrestre à moteur, tel que décrit ci-dessous.

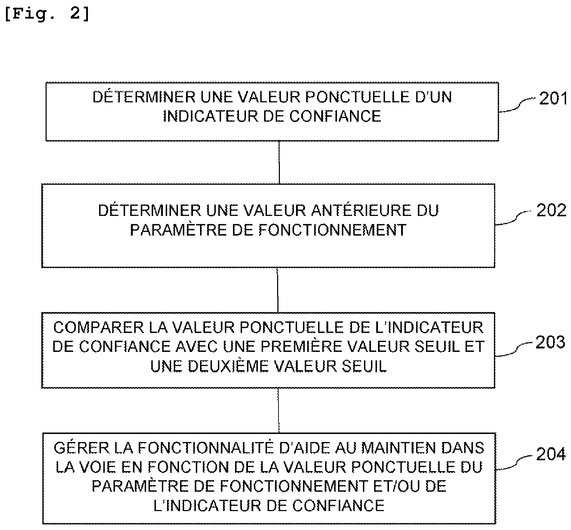

Comme illustré à la figure 2, selon une étape 201, le système 100 détermine en premier lieu une valeur ponctuelle d'un indicateur de confiance quantifiant un niveau de confiance quant à la perception d'une voie de circulation située à proximité du véhicule. Pour ce faire, le système 100 obtient des données générées par le système d'aide à la conduite en utilisant au moins un appareil de détection du système d'aide à la conduite du véhicule, par exemple la caméra du système d'aide à la conduite. En effet, lorsque le véhicule se déplace, la caméra transmet régulièrement et/ou continuellement des signaux qui sont interprétés par le système d'aide à la conduite, en utilisant par exemple un processeur de signal numérique intégré, pour générer ces données qui caractérisent l'environnement de conduite du véhicule, notamment la présence et/ou le positionnement de lignes de marquage longitudinal et/ou transversal (e.g. lignes de délimitation de voies de circulation, lignes de rives, etc.). Ces données générées par le système d'aide à la conduite sont donc obtenues/extraites/récupérées par le système 100, soit en interagissant avec le système d'aide à la conduite soit directement du support de stockage de données 102, pour mettre en œuvre une ou plusieurs étapes de traitement afin de déterminer la valeur ponctuelle de l'indicateur de confiance. De préférence, la valeur ponctuelle de l'indicateur de confiance ainsi déterminée est comprise entre zéro et cent, une valeur nulle correspondant à un niveau de confiance nul quant à la perception d'une voie de circulation et une valeur de cent correspondant à un niveau de confiance maximal quant à la perception d'une voie de circulation. Ainsi, l'on comprend que le système 100 détermine au cours de cette première étape un degré de certitude vis-à-vis de la capacité du système d'aide à la conduite à percevoir l'environnement de conduite à un instant donné.

Ensuite, selon une autre étape 202, le système 100 détermine une valeur antérieure du paramètre de fonctionnement. En effet, suite à une mise en œuvre antérieure du procédé selon l'invention, le système 100 a précédemment déterminé une valeur du paramètre de fonctionnement et celle-ci a été enregistrée dans le support de stockage de données 102. Aussi, par cette étape, le système 100 établit une prise en compte de l'historique au fil du temps de la valeur du paramètre de fonctionnement.

Ensuite, selon une autre étape 203, le système 100 compare la valeur ponctuelle de l'indicateur de confiance avec une première valeur seuil et une deuxième valeur seuil inférieure à la première valeur seuil. C'est sur la base de cette étape de comparaison que le système détermine ensuite la valeur ponctuelle du paramètre de fonctionnement. Plus spécifiquement, lorsque la valeur ponctuelle de l'indicateur de confiance est supérieure ou égale à la première valeur seuil, le système 100 détermine la valeur ponctuelle du paramètre de fonctionnement en opérant une augmentation de la valeur antérieure pour autant que celle-ci soit inférieure à une valeur maximale prédéfinie. Par exemple, le système ajoute à la valeur antérieure du paramètre fonctionnement une proportion de celle-ci. Alternativement, le système 100 ajoute à la valeur antérieure une valeur préétablie sélectionnée en fonction de la valeur antérieure.

Au contraire, lorsque la valeur ponctuelle de l'indicateur de confiance est inférieure à la première valeur seuil et supérieure ou égale à la deuxième valeur seuil, le système 100 détermine la valeur ponctuelle du paramètre de fonctionnement en opérant une diminution de la valeur antérieure. Par exemple, le système 100 retranche de la valeur antérieure une proportion de celle-ci. Alternativement, le système 100 retranche de la valeur antérieure une valeur préétablie sélectionnée en fonction de la valeur antérieure. Dans un troisième cas, lorsque la valeur ponctuelle de l'indicateur de confiance est inférieure à la deuxième valeur seuil, le système 100 procède en affectant une valeur nulle à la valeur ponctuelle du paramètre de fonctionnement.

Enfin, selon une étape 204, le système 100 détermine un ordre de commande gouvernant l'activation et/ou la désactivation de la fonctionnalité d'aide au maintien dans la voie et transmet cet ordre de commande au système d'aide à la conduite. Pour ce faire, lorsque la valeur ponctuelle du paramètre de fonctionnement est inférieure à une première valeur de consigne prédéfinie, le système 100 détermine et transmet au système d'aide à la conduite un ordre de commande qui contrôle la désactivation de la fonctionnalité d'aide au maintien dans la voie. Au contraire, lorsque la valeur ponctuelle du paramètre de fonctionnement est supérieure ou égale à une deuxième valeur de consigne supérieure à la première valeur de consigne et la valeur ponctuelle de l'indicateur de confiance est supérieure ou égale à la première valeur seuil, le système 100 détermine et transmet alors au système d'aide à la conduite un ordre de commande qui autorise l'activation de la fonctionnalité d'aide au maintien dans la voie.

Par consé1quent, aux termes du procédé et du système selon l'invention décrits ci-dessus, les briques fonctionnelles sont fournies pour permettre à un système d'aide à la conduite de contrôler l'activation et/ou la désactivation d'une fonctionnalité d'aide au maintien dans la voie de tels sorte à limiter les basculements intempestifs entre un état actif de la fonctionnalité d'aide au maintien dans la voie et un état inactif de celle-ci. En effet, contrairement au mécanismes connus, le procédé selon l'invention permet de conditionner l'activation et/ou la désactivation de la fonctionnalité d'aide au maintien dans la voie en regard d'un historique de la perception de l'environnement de conduite. Aussi, le procédé et le système selon l'invention permettent de lisser l'appréciation du contexte de conduite pour ainsi éviter de sur-réagir à une situation trop ponctuelle. En outre, en introduisant un seuil minimal en deçà duquel le paramètre de fonctionnement prend une valeur nulle, le procédé et le système selon l'invention limitent la possibilité de voir se produire des guidages erronés qui, on l'a constaté, interviennent généralement lorsque la perception de l'environnement de conduite est dégradée par certains facteurs externes (e.g. occlusion du champ de vue de la caméra, conditions climatiques, ligne de délimitation absentes, confusion avec l'ombre portée du mat d'un panneau de signalisation, etc.). Par ces mécanismes, le procédé et le système selon l'invention permettent donc d'éviter de rester trop longtemps dans une situation de perception moyennement dégradée qui permet le roulage mais induit un risque de voir la fonctionnalité d'aide au maintien dans la voie produire des guidages erronés.

## Revendications

1. Procédé de détermination, par un système informatique (100), d'une valeur ponctuelle d'un paramètre de fonctionnement qui est utilisé par un système d'aide à la conduite d'un véhicule terrestre à moteur pour gérer l'activation et la désactivation d'une fonctionnalité d'aide au maintien dans la voie, **caractérisé en ce que** le procédé comprend les étapes de :
- déterminer une valeur ponctuelle d'un indicateur de confiance quantifiant un niveau de confiance quant à la perception d'une voie de circulation située à proximité du véhicule en exploitant des données générées en utilisant au moins un appareil de détection du système d'aide à la conduite du véhicule,
- déterminer une valeur antérieure du paramètre de fonctionnement,
- comparer la valeur ponctuelle de l'indicateur de confiance avec une première valeur seuil et une deuxième valeur seuil inférieure à la première valeur seuil, et,
- lorsque la valeur ponctuelle de l'indicateur de confiance est supérieure ou égale à la première valeur seuil, déterminer la valeur ponctuelle du paramètre de fonctionnement en opérant une augmentation de la valeur antérieure pour autant que celle-ci soit inférieure à une valeur maximale prédéfinie,
- lorsque la valeur ponctuelle de l'indicateur de confiance est inférieure à la première valeur seuil et supérieure ou égale à la deuxième valeur seuil, déterminer la valeur ponctuelle du paramètre de fonctionnement en opérant une diminution de la valeur antérieure,
- lorsque la valeur ponctuelle de l'indicateur de confiance est inférieure à la deuxième valeur seuil, affecter une valeur nulle à la valeur ponctuelle du paramètre de fonctionnement.

2. Procédé selon la revendication 1, **caractérisé en ce qu'**il comprend une étape consistant à causer la désactivation de la fonctionnalité d'aide au maintien dans la voie lorsque la valeur ponctuelle du paramètre de fonctionnement est inférieure à une première valeur de consigne.

3. Procédé selon la revendication 2, **caractérisé en ce qu'**il comprend une étape consistant à autoriser l'activation de la fonctionnalité d'aide au maintien dans la voie lorsque la valeur ponctuelle de l'indicateur de confiance est supérieure ou égale à la première valeur seuil et la valeur ponctuelle du paramètre de fonctionnement est supérieure ou égale à une deuxième valeur de consigne supérieure à la première valeur de consigne.

4. Procédé selon l'une des revendications précédentes, **caractérisé en ce que** l'étape d'opérer une diminution consiste à retrancher de la valeur antérieure du paramètre de fonctionnement une proportion de celle-ci ou une première valeur préétablie sélectionnée en fonction de la valeur antérieure du paramètre de fonctionnement.

5. Procédé selon l'une des revendications précédentes, **caractérisé en ce que** l'étape d'opérer une augmentation consiste à ajouter à la valeur antérieure du paramètre de fonctionnement une proportion de celle-ci ou une deuxième valeur préétablie sélectionnée en fonction de la valeur antérieure du paramètre de fonctionnement.

6. Système informatique (100) de détermination d'une valeur ponctuelle d'un paramètre de fonctionnement qui est utilisé par un système d'aide à la conduite d'un véhicule terrestre à moteur pour gérer l'activation et la désactivation d'une fonctionnalité d'aide au maintien dans la voie, **caractérisé en ce qu'**il comprend des moyens (101, 102, 103, 104) de mise en œuvre d'un procédé selon l'une quelconque des revendications précédentes.

7. Système selon la revendication 6, **caractérisé en ce qu'**il comprend au moins un processeur (101) et des moyens de stockage (102) dans lesquels sont stockés au moins un programme pour l'exécution d'étapes selon le procédé de détermination mis en œuvre par le système.

8. Véhicule terrestre à moteur, **caractérisé en ce qu'**il comprend un système selon l'une des revendications 6 ou 7.

## Patentansprüche

1. Ein Verfahren zur Bestimmung eines Punktwertes eines Betriebsparameters durch ein Computersystem (100), der von einem Fahrerassistenzsystem für ein Kraftfahrzeug zur Steuerung der Aktivierung und Deaktivierung einer Spurhalteassistenzfunktion verwendet wird, **dadurch gekennzeichnet, dass** das Verfahren die folgenden Schritte umfasst:
- um einen Punktwert für einen Konfidenzindikator zu ermitteln, der den Grad des Vertrauens in die Wahrnehmung einer in der Nähe des Fahrzeugs befindlichen Fahrspur quantifiziert, indem Daten genutzt werden, die mit mindestens einem Erfassungsgerät des Fahrerassistenzsystems des Fahrzeugs generiert werden,
- einen vorherigen Wert des Betriebsparameters ermitteln,
- Vergleiche den Punktwert des Konfidenzindikators mit einem ersten Schwellenwert und einem zweiten Schwellenwert, der niedriger als der erste Schwellenwert ist, und
- Wenn der Punktwert des Konfidenzindikators größer oder gleich dem ersten Schwellenwert ist, wird der Punktwert des Betriebsparameters durch Erhöhung des vorherigen Wertes bestimmt, vorausgesetzt, dieser ist kleiner als ein vordefinierter Maximalwert.
- Wenn der Punktwert des Konfidenzindikators kleiner als der erste Schwellenwert und größer oder gleich dem zweiten Schwellenwert ist, wird der Punktwert des Betriebsparameters durch Verringerung des vorherigen Wertes bestimmt.
- Wenn der Punktwert des Konfidenzindikators kleiner als der zweite Schwellenwert ist, wird dem Punktwert des Betriebsparameters der Wert Null zugewiesen.

2. Verfahren nach Anspruch 1, **dadurch gekennzeichnet, dass** es einen Schritt umfasst, bei dem die Funktion des Spurhalteassistenten deaktiviert wird, wenn der Punktwert des Betriebsparameters kleiner als ein erster Sollwert ist.

3. Verfahren nach Anspruch 2, **dadurch gekennzeichnet, dass** es einen Schritt der Aktivierung der Spurhalteassistentenfunktion umfasst, wenn der Punktwert des Vertrauensindikators größer oder gleich dem ersten Schwellenwert ist und der Punktwert des Betriebsparameters größer oder gleich einem zweiten Sollwert ist, der größer als der erste Sollwert ist.

4. Verfahren nach einem der vorhergehenden Ansprüche, **dadurch gekennzeichnet, dass** der Reduktionsschritt darin besteht, vom vorherigen Wert des Betriebsparameters einen Anteil davon oder einen ersten, vorher festgelegten Wert, der nach dem vorherigen Wert des Betriebsparameters ausgewählt ist, zu subtrahieren.

5. Verfahren nach einem der vorhergehenden Ansprüche, **dadurch gekennzeichnet, dass** der Schritt der Erhöhung darin besteht, dem vorherigen Wert des Betriebsparameters einen Anteil davon oder einen zweiten, vorher festgelegten Wert, der nach dem vorherigen Wert des Betriebsparameters ausgewählt ist, hinzuzufügen.

6. Computersystem (100) zur Bestimmung eines Punktwertes eines Betriebsparameters, der von einem Fahrerassistenzsystem eines Kraftfahrzeugs zur Steuerung der Aktivierung und Deaktivierung einer Spurhalteassistenzfunktion verwendet wird, **dadurch gekennzeichnet, dass** es Mittel (101, 102, 103, 104) zur Durchführung eines Verfahrens nach einem der vorhergehenden Ansprüche umfasst.

7. System nach Anspruch 6, **dadurch gekennzeichnet, dass** es mindestens einen Prozessor (101) und einen Speicher (102) umfasst, in dem mindestens ein Programm zur Ausführung von Schritten gemäß dem vom System implementierten Bestimmungsverfahren gespeichert ist.

8. Motorisiertes Landfahrzeug, **dadurch gekennzeichnet, dass** es ein System nach einem der Ansprüche 6 oder 7 umfasst.

## Claims

1. A method for determining, by a computer system (100), a point value of an operating parameter used by a driver assistance system for a motor vehicle to manage the activation and deactivation of a lane-keeping assistance feature, **characterized in that** the method comprises the steps of:
- to determine a point value for a confidence indicator quantifying a level of confidence in the perception of a traffic lane located near the vehicle by exploiting data generated using at least one detection device of the vehicle's driver assistance system,
- determine a previous value of the operating parameter,
- compare the point value of the confidence indicator with a first threshold value and a second threshold value lower than the first threshold value, and,
- When the point value of the confidence indicator is greater than or equal to the first threshold value, determine the point value of the operating parameter by increasing the previous value, provided that this is less than a predefined maximum value.
- When the point value of the confidence indicator is less than the first threshold value and greater than or equal to the second threshold value, determine the point value of the operating parameter by decreasing the previous value.
- when the point value of the confidence indicator is less than the second threshold value, assign a zero value to the point value of the operating parameter.

2. Method according to claim 1, **characterized in that** it comprises a step of causing the deactivation of the lane keeping assist functionality when the point value of the operating parameter is less than a first setpoint value.

3. Method according to claim 2, **characterized in that** it comprises a step of enabling the activation of the lane keeping assist functionality when the point value of the confidence indicator is greater than or equal to the first threshold value and the point value of the operating parameter is greater than or equal to a second setpoint value greater than the first setpoint value.

4. A method according to any one of the preceding claims, **characterized in that** the step of operating a reduction consists of subtracting from the previous value of the operating parameter a proportion of it or a first pre-established value selected according to the previous value of the operating parameter.

5. A method according to any one of the preceding claims, **characterized in that** the step of performing an increase consists of adding to the previous value of the operating parameter a proportion thereof or a second pre-established value selected according to the previous value of the operating parameter.

6. Computer system (100) for determining a point value of an operating parameter which is used by a driver assistance system of a motor vehicle to manage the activation and deactivation of a lane keeping assistance feature, **characterized in that** it includes means (101, 102, 103, 104) for implementing a method according to any one of the preceding claims.

7. System according to claim 6, **characterized in that** it comprises at least one processor (101) and storage means (102) in which at least one program is stored for the execution of steps according to the determination method implemented by the system.

8. Motorized land vehicle, **characterized in that** it comprises a system according to one of claims 6 or 7.
